# EUROPEAN PATENT APPLICATION

(11) **EP 0 810 540 A2**
(43) Date of publication of application: **03.12.1997**
(21) Application number: 97104331.0
(22) Date of filing: 13.03.1997
(51) Int. Cl.: G06K 7/00

(54) **Contactless identification system**

(30) Priority: 30.05.1996 GB 9611298
(71) Applicant: MOTOROLA, INC., Schaumburg, IL 60196 (US)
(72) Inventor: Burri, Michel, 1218 Gd-Saconnex (CH); Staufer, Hans, 1261 (CH)
(74) Representative: Hudson, Peter David

(57) **Abstract**

A contactless identification system (10) comprises a cathode ray screen (40) having a predetermined scanning rate, a remote tag (20) and a reader device (30, 45) positioned in proximity to the cathode ray screen (40), and arranged for receiving electromagnetic radiation. Electromagnetic emissions associated with the predetermined scanning rate activate the remote tag (20), such that the when the remote tag (20) is in proximity to the cathode ray screen (40) and the reader device (30, 45), the reader device (30, 45) identifies the presence of the remote tag (20).

## Description

### Field of the Invention

This invention relates to contactless identification systems and particularly but not exclusively to contactless security systems using cathode ray screens.

### Background of the Invention

Maintaining the security of information stored on computer terminals and workstations is becoming an increasing problem, especially with modern, open plan offices.

To prevent sensitive data such as marketing statistics and other confidential information from being illicitly obtained, many computer users have security features such as password protection and screen lockout facilities, to prevent unauthorised access and viewing of the screen when the computer is left unattended.

A problem with this arrangement is that each time the user leaves his or her station, these security features must be invoked, and each time the user returns to the station, the security features must be deactivated, in order to ensure complete security. For very short interludes, the user may be tempted not to invoke the security measures, thus compromising security.

Contactless identification systems typically operate at frequencies in the vicinity of 125 KHz and using magnetic coupling methods to exchange identification data. A base station transmits energy and data to a remote tag, and the remote tag responds by reflecting data back to the base station in a predetermined manner, which is then used by the base station to identify the tag.

In attempting to use a contactless identification system for security purposes with a computer terminal or workstation, the frequency of electromagnetic emissions from a screen or VDU (Visual Display Unit) of the computer would interfere with the frequency of the contactless system, particularly in the case of a modern highly specified monitor, where a high scanning frequency is used. Thus a conventional system cannot be used.

This invention seeks to provide a contactless data transfer system which mitigates the above mentioned disadvantages.

### Summary of the Invention

According to the present invention there is provided a contactless identification system, comprising: a cathode ray screen having a predetermined scanning rate; a remote tag; a reader device positioned in proximity to the cathode ray screen, and arranged for receiving electromagnetic radiation; wherein electromagnetic emissions associated with the predetermined scanning rate activate the remote tag, such that the when the remote tag is in proximity to the cathode ray screen and the reader device, the reader senses the presence of the remote tag.

Preferably the reader device includes a loop antenna disposed about the cathode ray screen. The reader device preferably includes a register containing a stored remote tag identification code, and the remote tag contains an identification code which is transmitted when the remote tag is activated, the reader device being arranged to send a signal to a microcontroller when received electromagnetic radiation contains a signal matching the stored remote tag identification code, thereby indicating the proximity of the remote tag.

Preferably the microcontroller forms part of a computer system incorporating the cathode ray screen, the microcontroller being arranged to activate a security measure when the presence of the remote tag is not sensed. The security measure is preferably a screen saver. Alternatively, the security measure is preferably a keyboard lockout feature.

Alternatively the microcontroller forms part of a telephone system.

In this way a contactless identification system is provided which affords security features such as a screen saver and a keyboard lockout feature to be easily implemented with little effort on the part of the user, and which overcomes the problems of conventional contactless devices, which would suffer with interference from the cathode ray screen.

### Brief Description of the Drawing(s)

An exemplary embodiment of the invention will now be described with reference to the drawing in which:
FIG. 1 shows a preferred embodiment of a contactless identification system in accordance with the invention.
FIG.2 shows a graph of electromagnetic signals associated with the embodiment of FIG.1.

### Detailed Description of a Preferred Embodiment

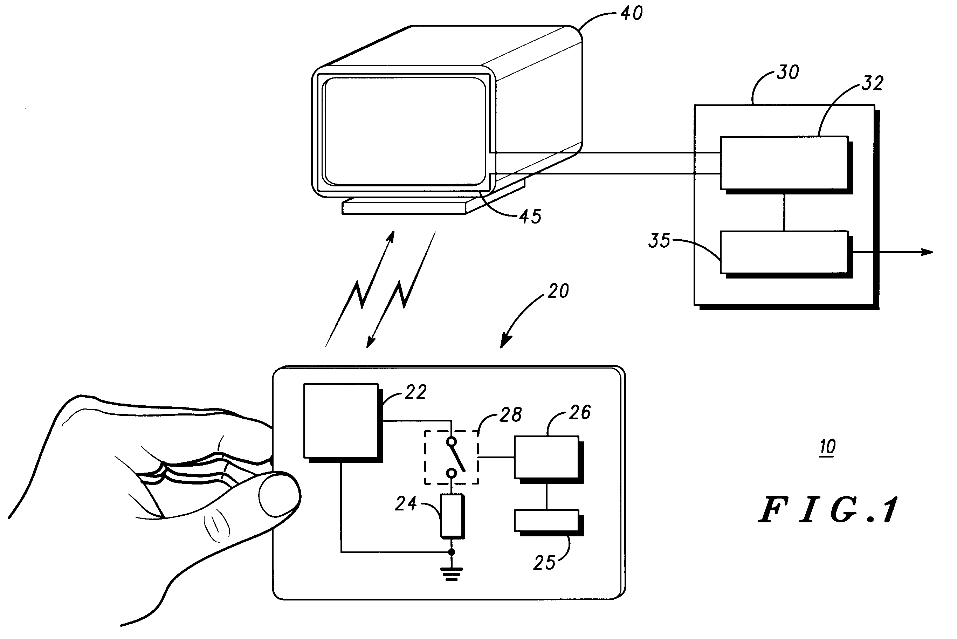

Referring to FIG.1, there is shown a contactless identification system 10, comprising a remote tag 20, a reader circuit 30 and a monitor 40.

The remote tag 20 may be incorporated in a lapel badge such as an employee identification badge. The remote tag 20 contains a tuned circuit 22 and a control circuit 26, arranged to be powered by received electromagnetic radiation in the order of 100 kHz. The tuned circuit 22 has a tuned frequency in the order of 100kHz. A switched impedance 24 is coupled in series to the tuned circuit 22, and is arranged to provide switching, via a switch 28, between first and second power absorption levels of the tuned circuit 22. The control circuit 26, when powered, is arranged to control the switching the switched impedance 24 according to an identification code, stored in a code memory 25. In this way, the tuned circuit 22 is switched between the first and second power absorption levels according to the identification code from the code memory 25, thereby modulating the reflected electromagnetic radiation from the remote tag 20 according to the identification code.

The monitor 40 may be a computer visual display unit (VDU) or any display device having a cathode ray screen with a raster scan rate in the order of 100 kHz.

A loop antenna 45 is mounted around the screen of the monitor 40, and is arranged for receiving electromagnetic radiation in the order of 100 kHz.

The reader circuit 30 has a demodulator circuit 32, coupled to the loop antenna 45 and arranged for demodulating received signals therefrom, derived from the received electromagnetic radiation. A register 35 contains a stored identification code of the remote tag, and is arranged to receive demodulated signals from the demodulator circuit 32, and provides an output to a Microcontroller (MCU).

In operation, with the monitor 40 operational, electromagnetic radiation is emitted from the screen, the electromagnetic radiation having a substantial component equal to the raster scan rate of 100kHz. When the user is not in proximity to the monitor 40, the loop antenna 45 picks up background electromagnetic radiation and radiation from the screen of the monitor 40. The demodulator circuit 32 demodulates this radiation and provides demodulated signals to the register 35, which compares the signals with the stored identification code. Since no match will occur no signal is sent to the MCU.

When the user is in proximity to the monitor 40, the remote tag 20 (which is incorporated in the user's identification badge) is activated and the control circuit 26 causes the tuned circuit 22 to be switched between first and second power absorption levels which modulate the electromagnetic radiation, according to the identification code provided by the code memory 25. The loop antenna 45 picks up the modulated electromagnetic radiation from the screen of the monitor 40. The demodulator circuit 32 demodulates this radiation and provides demodulated signals to the register 35, which now contain the identification code of the remote tag 40. The register compares the received demodulated signals with the stored identification code and upon the occurrence of a match, a signal is sent to the MCU, informing it that the user is now in the immediate vicinity of the screen.

The signal could be used by the MCU to activate and deactivate screen saver software in the monitor, or to initiate and terminate a login procedure or keyboard locking feature.

Furthermore, using a number of remote tags 20, with a different identification code stored in the code memory of each tag and with the register 35 containing all identification codes, it is possible for the MCU to determine which one of a number of users is in the vicinity of the monitor 40.

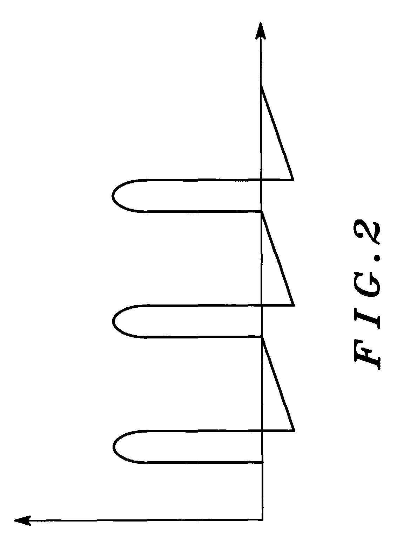

FIG.2 shows a graph of a typical voltage waveform of a cathode ray screen, as provided at a deflection coil thereof. This waveform will be filtered by the loop antenna resulting in a sinusoidal waveform. This waveform contains a number of frequencies, centred on 100kHz.

It will be appreciated that alternative embodiments to the one described above are possible. For example, a monitor 40 and reader 30 arrangement could be utilised at every workstation in an office, such that each user, having a remote tag with a unique identification code, is recognised when in proximity to any monitor 40. This information could also be transmitted to an office telephone exchange, in order to automatically redirect telephone calls to users in dependence upon their known positions within the office.

The raster scan rate could be different form the 100kHz rate mentioned above. Some existing computer monitors already exceed this frequency. The remote tag 20 could be alternatively incorporated in an item of clothing or be otherwise attached to the user.

## Claims

1. A contactless identification system, comprising:
a cathode ray screen having a predetermined scanning rate;
a remote tag;
a reader device positioned in proximity to the cathode ray screen, and arranged for receiving electromagnetic radiation;
wherein electromagnetic emissions associated with the predetermined scanning rate activate the remote tag, such that the when the remote tag is in proximity to the cathode ray screen and the reader device, the reader senses the presence of the remote tag.

2. The contactless identification system of claim 1, wherein the reader device includes a loop antenna disposed about the cathode ray screen.

3. The contactless identification system of claim 1 or claim 2, wherein the reader device includes a register containing a stored remote tag identification code, and the remote tag contains an identification code which is transmitted when the remote tag is activated, the reader device being arranged to send a signal to a microcontroller when received electromagnetic radiation contains a signal matching the stored remote tag identification code, thereby indicating the proximity of the remote tag.

4. The contactless identification system of claim 3 wherein the microcontroller forms part of a computer system incorporating the cathode ray screen, the microcontroller being arranged to activate a security measure when the presence of the remote tag is not sensed.

5. The contactless identification system of claim 4 wherein the security measure is a screen saver.

6. The contactless identification system of claim 4 wherein the security measure is a keyboard lockout feature.

7. The contactless identification system of claim 3 wherein the microcontroller forms part of a telephone system.
